# EUROPEAN PATENT SPECIFICATION

(11) **EP 3 519 480 B1**
(45) Date of publication and mention of the grant of the patent: **25.01.2023**
(21) Application number: 17790863.9
(22) Date of filing: 29.09.2017
(51) Int. Cl.: C08G 65/36, C08G 6/00, H01G 9/20

(54) **PROCESS FOR THE MODIFICATION OF HUMINS**
VERFAHREN ZUR MODIFIZIERUNG VON HUMINEN
PROCÉDÉ DE MODIFICATION DES HUMINES

(30) Priority: 29.09.2016 NL 2017547
(43) Date of publication of application: 07.08.2019
(73) Proprietor: Furanix Technologies B.V., 1014 BV Amsterdam (NL)
(72) Inventor: MIJA, Alice Cristina, 06100 Nice (FR); VAN DER WAAL, Jan Cornells, 1014 BV Amsterdam (NL); DE JONG, Edserd, 1014 BV Amsterdam (NL); VAN KLINK, Gerardus Petrus Maria, 1014 BV Amsterdam (NL)
(74) Representative: EP&C
(86) International application number: PCT/NL2017/050651
(87) International publication number: WO 2018/062995

(56) References cited:
- WO-A1-2011/024171
- WO-A1-2015/088341
- WO-A1-2016/130005
- JEAN-MATHIEU PIN ET AL: "Valorization of Biorefinery Side-Stream Products: Combination of Humins with Polyfurfuryl Alcohol for Composite Elaboration", ACS SUSTAINABLE CHEMISTRY & ENGINEERING, vol. 2, no. 9, 17 July 2014 (2014-07-17), pages 2182-2190, XP055314292, US ISSN: 2168-0485, DOI: 10.1021/sc5003769
- YUEHU WANG ET AL: "Catalytic Hydrotreatment of Humins in Mixtures of Formic Acid/2-Propanol with Supported Ruthenium Catalysts", CHEMSUSCHEM, vol. 9, no. 9, 2 February 2016 (2016-02-02), pages 951-961, XP055314269, DE ISSN: 1864-5631, DOI: 10.1002/cssc.201501371 & Yuehu Wang ET AL: "Supporting Information Catalytic Hydrotreatment of Humins in Mixtures of Formic Acid/2-Propanol with Supported Ruthenium Catalysts", , 2 February 2016 (2016-02-02), pages S1-S6, XP055314287, Retrieved from the Internet: URL:http://onlinelibrary.wiley.com/store/1 0.1002/cssc.201501371/asset/supinfo/cssc20 1501371-sup-0001-misc_information.pdf?v=1& s=aaa75d62a662e7ecdc8c0e7e0cd3c3800cbc217c [retrieved on 2016-10-26]
- Alice Mija ET AL: "HUMINS AS PROMISING MATERIAL FOR PRODUCING SUSTAINABLE POLYSSACHARIDE-DERIVED BUILDING MATERIALS", First International Conference on Bio-based Building Materials, 22-24 June, Clermont-Ferrand, France - Conference Paper, 1 June 2015 (2015-06-01), pages 1-6, XP055314606, Retrieved from the Internet: URL:https://www.researchgate.net/profile/E d_De_Jong2/publication/280942285_Humins_as _promising_material_for_producing_sustaina ble_polyssacharide-derived_building_materi als/links/55cdad2e08aebebb8f5785f6.pdf?ori gin=publication_detail [retrieved on 2016-10-27]

## Description

The present invention relates to a process for the modification of humins.

Humins constitute a known material. US 3293200 describes thermosetting adhesive compositions that are useful in the manufacture of plywood and contain, as essential ingredients, a water-soluble phenol-aldehyde resin and a water-insoluble, finely-divided humins material obtained from the manufacture of levulinic acid by acid hydrolysis of lignocellulose, i.e. a natural product comprising a combination of carbohydrates and lignin. Although various procedures are known for the manufacture of levulinic acid from lignocellulose, the reaction generally is carried out under severe acid hydrolysis conditions at a temperature in excess of 150 °C, usually between 170 °C and 210 °C in the presence of a strong acid catalyst. During the reaction, humins material is formed as a result of an acid catalyzed breakdown of lignocellulose while substantially the entire carbohydrate portion of the lignocellulose is degraded to hexosans and the hexosans are converted to the desired levulinic acid.

Humins have been obtained in the dehydration of carbohydrates in the manufacture of levulinic acid, 5-hydroxymethylfurfural and/or 5-alkoxymethylfurfural and/or acyloxymethyl-furfural. Humins are also formed in the conversion of 5-hydroxymethylfurfural to levulinic acid and formic acid (cf. G. Tsilomelekis et al., Green Chem., 2016, 18, 1983-1993). An example of such a dehydration reaction of carbohydrates is described in DE 3621517. Other examples of humins-producing processes are described in WO 2007/104514 describing the preparation of 5-alkoxymethylfurfural, and WO 2007/104515, disclosing the preparation of 5-acyloxymethylfurfural. Although the latter processes have set out to reduce the yield of humins, the processes unavoidably yield amounts of humins for which a useful outlet is sought. The processes are typically conducted in the presence of an acid catalyst. Catalysts used are generally mineral acids. In the process of recovering the desired products, the catalyst used is typically neutralized whereby salts are obtained. These salts are recovered together with the humins.

A potential use of humins has been described in DE 3621517, where it is stated that the humins, i.e. the by-product of the preparation of alkoxymethylfurfural and alkyl levulinates from cellulose, lignocellulose or starch with an alcohol, are filtered from the liquid products and can only be used for the provision of heat by combusting it. Also in WO 2010/124381 the conversion of cellulose has been described, leading to glucose, hydroxymethylfurfural and other small organic compounds on the one hand and a humins-containing biofuel on the other hand. The biofuel is obtained as a solid. The feature that the biofuel is solid already hampers the application thereof. Moreover, the presence of inorganic salts that result from the neutralization of acid catalysts used, are also detrimental for the use of humins, even as biofuel. It would therefore be very advantageous, if humins can be used in a more economic and value-added application, e.g. as a liquid fuel, and which may be obtained in a salt-free phase.

In WO 2015/088341 the use of humins in the preparation of viscous resins has been described. A blend of humins and furfural alcohol is mixed with an acidic polymerization initiator. The resulting admixture may be cured at elevated temperature to result in a viscous resin, which can be used for the preparation of an adhesive. In a particular example furfuryl alcohol, humins and maleic anhydride were mixed and allowed to react at a temperature in the range of 105 to 145 °C. A viscous resin was obtained. It appeared that at the reaction conditions furfuryl alcohol and humins polymerized resulting in the viscosity increase.

Further processes for converting humins are described in WO 2016/130005 A1, in the article by Jean-Mathieu Pin et al., "Valorization of biorefinery side-stream products: combination of humins with polyfurfuryl alcohol for composite elaboration", ACS Sustainable Chemistry & Engineering, vol. 2, no. 9, 17 July 2014, pages 2182-2190, in the article by Yuehu Wang et al., "Catalytic hydrotreatment of humins in mixtures of formic acid / 2-propanol with supported ruthenium catalysts", Chemsuschem, vol. 9, no. 9, 2 February 2016, pages 951-961, and in the article by Alice Mija et al. "Humins as promising material for producing sustainable polysaccharide-derived building materials", First International Conference on Bio-based Building Materials, 22-24 June, Clermont-Ferrand, France, Conference paper, 1 June 2015.

It has now been found that water-soluble components can be removed from humins while a significant viscosity decrease for humins can be obtained when the humins are modified with certain reactive compounds and subjected to a washing treatment. Accordingly, the present invention provides a process for the modification of humins and removing water-soluble components therefrom comprising:
- contacting humins with a reactive compound selected from the group consisting of a carboxylic acid, a carboxylic halide, a carboxylic anhydride, an olefin, an epoxy-group containing compound and combinations thereof in the presence of an organic aprotic solvent to obtain a humins-containing admixture;
- maintaining the humins-containing admixture at elevated temperature to achieve a reaction between the humins and the reactive compound, thereby obtaining modified humins;
- washing the modified humins with an aqueous washing liquid; and
- recovering the modified humins.

Furfuryl alcohol is a protic solvent. It has the drawback of being able to polymerize and thereby to increase the viscosity, and is therefore not a suitable solvent.

In this specification humins are the colored bodies which are carbonaceous water-insoluble by-products of the dehydration of carbohydrates and/or 5-hydroxymethylfurfural and/or ethers or esters of 5-hydroxymethylfurfural. They are believed to be polymers containing moieties from 5-hydroxymethylfurfural, furfural, residual carbohydrate and levulinic acid. These colored bodies are *inter alia* produced as by-products in the partial degrading of carbohydrates by heat or other processing conditions, as described in e.g. EP 338151. The molecular structure of humins is not yet unequivocally established. Humins are believed to be macromolecules containing *inter alia* furfural and hydroxymethylfurfural moieties. Further moieties that may be included in humins are carbohydrate, levulinate and alkoxymethyl furfural groups. A mechanism for the formation of humins molecules may be a polycondensation pathway, leading to a network of furan rings linked by ether and acetal bonds. A structure for humins is presented in I. van Zandvoort et al. ChemSusChem, 2013, 6, 1745 - 1758. In this journal article the humins structure is characterized by furan rings connected via alkylene moieties. Thus, typical for humins are furan rings and alkylene groups, such as methylene and ethylene groups, whereas other constituent groups may be hydroxyl, aldehyde, ketone, ether, carboxylic acid and ester groups. When the dehydration of the carbohydrates into furan derivatives is carried out in the presence of an organic solvent other functional groups, such as alkoxy and alkyl ester groups, may be present.

Humins may also be characterized with reference to the Van Krevelen diagram. In such a diagram the hydrogen index, i.e. the atomic hydrogen:carbon ratio, and the oxygen index, i.e. the atomic oxygen:carbon ratio, are plotted against each other. It was found that humins suitably have an oxygen:carbon atomic ratio in the range of 0.30 to 0.70, preferably from 0.40 to 0.60 and a hydrogen:carbon atomic ratio in the range of 0.60 to 1.6, preferably from 0.80 to 1.40. In this specification humins are in particular water insoluble by-products that have been obtained from the acid-catalyzed dehydration of carbohydrates, such as cellulose, starch, sugars such as glucose, fructose and combinations thereof. Such dehydration processes are suitably used for the conversion of carbohydrates to levulinic acid or esters thereof, or 5-hydroxymethylfurfural or ethers or esters thereof. Such processes have i.a. been described in the above-mentioned patent documents DE 3621517, WO 2007/104514 and WO 2007/104515. The humins are generally water-insoluble. However, they tend to be very hydrophilic. Their hydroxyl and carboxyl moieties give the humins a hydrophilic character. When some of the polymeric components of the humins are relatively small, they may be incorporated into water when these components are contacted with an aqueous medium. The hydrophilic behavior of humins may result in the formation of colloids when humins are contacted with water. That may make it difficult to wash humins with an aqueous medium. Since washing with water is troublesome, the removal of inorganic salts by washing with water tends to be hampered by the hydrophilicity of humins.

Without wishing to be bound by any theory it is believed that the reactive compounds that are used in the present process react with functional groups in humins, thereby reducing the hydrophilic character of the modified humins. The reduced hydrophilic character of the modified humins provides a number of advantageous properties. The modified humins have a lesser tendency to combine with an aqueous medium. Therefore it is easier to purify the modified humins by washing with water or an aqueous medium, in order to remove inorganic material, such as salts. The presence of salts may be detrimental to the heating value of the humins. Moreover, some inorganic materials, such as sulfates, are undesirable in any combustible fuel since noxious sulfur oxides may be formed. By being able to remove sulfur-containing inorganic material from humins, the skilled person can enhance the usefulness of the modified humins as fuel. A further advantage is that the modified humins tend to get a reduced viscosity. Therefore they can be used, e.g. as liquid fuel. This represents a considerable advantage over the known use of humins as solid fuel which is more difficult to handle. Moreover, the modified humins tend to be soluble in organic solvents and hydrocarbons. Therefore, the modified humins can conveniently be blended with organic solvents and/or fuels so that the modified humins can be used in conventional liquid fuels, such as diesel or heavy gasoil or residual oil.

The reactive compound that is used in the process according to the present invention is selected from the group consisting of a carboxylic acid, a carboxylic anhydride, a carboxylic halide, an olefin, an epoxy-group containing compound and combinations thereof. When the reactive compound is a carboxylic acid, the carboxylic acid may be chosen from a wide range of carboxylic acids. The number of carbon atoms may be in the range of 1 to 25 carbon atoms. Suitable acids include formic acid, acetic acid, propionic acid, butyric acid, valeric acid, hexanoic acid, but also lauric acid or stearic acid. The carboxylic acid may be saturated, but also unsaturated. Suitable unsaturated carboxylic acids have 3 to 20 carbon atoms and may have one or more unsaturated bonds. A suitable unsaturated acid is e.g. acrylic acid, linoleic acid, linolenic acid or oleic acid. The carboxylic acid may comprise one or more, e.g. from one to four carboxylic groups. Accordingly, the process of the present invention can also be carried out with diacids or triacids. Such acids may contain from 2 to 20 carbon atoms and include e.g. oxalic acid, malonic acid, succinic acid, adipic acid and sebacic acid. As indicated, the carboxylic acid may be used as such. An example of an unsaturated diacid is maleic acid. The carboxylic acid may also comprise other functional groups and/or heteroatoms. Such functional groups may for instance be selected from one or more of amino, aldehyde, hydroxyl, amido and ether groups. Further, the carboxylic acids may comprise one or more heteroatoms in the acyl moiety, such as oxygen or nitrogen groups. When the modified humins are used in applications wherein the modified humins are combusted the hetero atom is preferably oxygen and the functional groups suitably comprise carbon, hydrogen and/or oxygen, as nitrogen and other heteroatoms, such as sulfur and phosphorus could result in noxious combustion gases. Examples of such suitable carboxylic acids include lactic acid and levulinic acid.

The reactive compound may also be selected from acyl halides. The halogen moiety of the halide can be a fluoride, chloride, bromide or iodide. In view of the costs, availability and ease of handling, the use of the chloride is preferred. The acyl moiety of the acyl halide may comprise a wide variety of carbon atoms. Similarly to the carboxylic acids that are mentioned hereinbefore, the carbonyl moiety in the acyl halides may have a number of carbon atoms in the range of 1 to 25 carbon atoms, Suitable examples include acetyl chloride, acetyl bromide, propionyl chloride, butyryl chloride, but also longer chain molecules such as lauroyl chloride or stearoyl chloride. The acyl halides may also be derived from polyacids, such as di-, tri- or tetra-acids. An example of such an acyl halide is sebacoyl chloride.

When the reactive compound is selected from a carboxylic anhydride, the carboxylic acids that may be used to compose the anhydride can be selected from a wide range of acids. The acids may have a number of carbon atoms in the range of 2 to 25 carbon atoms. Suitable acids include acetic acid, propionic acid, butyric acid, valeric acid, hexanoic acid, but also lauric acid or stearic acid. The carboxylic acid may be saturated, but also unsaturated. Suitable unsaturated carboxylic acids have 3 to 20 carbon atoms and may have one or more unsaturated bonds. Preferably, the two carboxylic acids that form the anhydride are the same. Therefore, the acids having from 2 to 25 carbon atoms are suitably selected from acetic anhydride, propionic anhydride, butyric anhydride, valeric anhydride, and stearic anhydride. Anhydrides tend to react quickly with the humins macromolecules. In the reaction one of the carboxylic acid moieties from the anhydride is released and may react further with a functional group of the humins macromolecule. The acids forming the anhydride may also be selected from polyacids, in particular from diacids. Preferably, the carboxylic anhydride is selected from a diacid having from 4 to 6 carbon atoms. In particular the preferred anhydride is succinic anhydride. The carboxylic anhydride may also comprise unsaturated carboxylic acid moieties. When the carboxylic acid that is used to form the anhydride is unsaturated, a preferred carboxylic anhydride is maleic anhydride.

When the reactive compound is a carboxylic acid, a carboxylic anhydride, or an acyl halide, the chain that is attached to the carboxyl or carbonyl group is preferably saturated. When the reactive compound comprises an unsaturated carbon-carbon bond in addition to the reactive carboxyl or carbonyl group, the reactive compound may become too reactive so that the modified humins obtained may be cross-linked and formed into an insoluble solid. Therefore, the reactive compound selected from the group consisting of a carboxylic acid, an acyl halide and a carboxylic anhydride, is suitably a saturated compound.

The reactive compound may also be an olefin. The olefin compound may have more than one unsaturated bond. However, it is believed that the reaction that takes place is a type of Diels Alder reaction, wherein a reactive diene is provided by the furan rings of the humins and the added olefin provides the dienophile. Therefore, the unsaturated compound suitably does not contain conjugated double bonds. Preferably, the olefin is a mono-olefin. The olefin may comprise heteroatoms, e.g. by means of an ether linkage or an aldehyde or ketone moiety. Preferably, the olefin is a hydrocarbyl compound, comprising only hydrogen and carbon. In this way the hydrophobicity of the product is enhanced. The olefin may have from 4 to 20 carbon atoms, preferably from 4 to 8 carbon atoms. Preferably, the olefin is selected from the group consisting of butenes, pentenes, hexenes, heptenes, octenes and combinations thereof. Examples of suitable olefins include 1-butene, 2-butene, 1-hexene, 1,7-octadiene, and mixtures thereof.

The reactive compound may be selected from epoxy-group containing compounds. Examples are compounds that comprise a glycidyl group, such as C₁-C₆ alkyl glycidyl ethers, bisphenol-A diglycidyl ether and glycidyl esters of C₁₋C₆ carboxylic acids. Other suitable epoxy-group containing compounds are epoxidized vegetable oils, such as epoxidized linseed oil (ELO) or epoxidized soybean oil (ESO). Without wishing to be bound by any theory it is believed that the epoxy groups in these compounds react with one or more hydroxyl group in the humins thereby creating an ether moiety. If such a reaction takes place, the epoxy-group containing compound also produces an additional hydroxyl group. Although the ether group formed has a lower hydrophilicity than the original hydroxyl group the newly formed hydroxyl group may cause an increase in hydrophilicity of the resulting product. To counteract the increase in hydrophilicity the epoxy-group containing compound is suitably a compound with one or more significantly hydrophobic chains. Such chains may preferably comprise from 8 to 35 carbon atoms. Vegetable oils provide very suitable reactive compounds. It is believed that by the reaction of humins with epoxidized vegetable oils, flexible chains are introduced onto the humins macromolecule through the aliphatic segments of the triglycerides-containing oils. As the aliphatic segments of such oils tend to be rather long, e.g. having 12 to 30 carbon atoms, any hydrophilic effect of a hydroxyl group formed is offset by the hydrophobic character of the long carbon chain.

It is preferred that the reactive compound is selected from carboxylic anhydrides and olefins. Acyl halides tend to produce hydrogen halides as by-products. Such acidic by-products are generally undesirable. Carboxylic acids react at a slower rate than the anhydrides, which makes the use of anhydrides preferable. It was found that the reaction of an olefin with the furyl rings in the humins also proceed relatively fast. Therefore, the reactive compound is preferably a carboxylic anhydride selected from a C₂-C₆ carboxylic anhydride, in particular from acetic anhydride and succinic anhydride, or an olefin having from 4 to 8 carbon atoms. In case of such an olefin the olefin is suitably selected from the group consisting of butenes, pentenes, hexenes, heptenes, octenes and combinations thereof.

The amount of the reactive compound may vary within wide ranges. Typically, the skilled person will ensure that there is at least a stoichiometric amount of reactive compound vis-à-vis the amount of functional groups in the humins. Such is, however, not necessary. If the desired property, e.g. the reduced viscosity, is obtained by a partial conversion of the functional groups in the humins the skilled person may be satisfied with a partial conversion only. The amount of the reactive compound per amount of humins is suitably from 0.001 to 1.0 g, preferably 0.05 to 0.5 g reactive compound per g humins. This range is applicable to any of the reactive compounds described above.

The humins that can be used in the process of the present invention have suitably been obtained in the conversion of a carbohydrate or 5-hydroxymethylfurfural. The structural features of the humins that are produced by these conversions have been studied as reported in S. Patil et al., Energy Fuels, 2012, 26, 5281-5291. The study concludes that the structures as shown by their IR spectra are quite similar except for some peaks that are attributed to a carbonyl group. These minor differences in humins do not lead away from the conclusion that all humins contain hydroxyl, carboxylic, carbonyl and furan groups. Preferably, the humins have been obtained from the conversion of fructose or glucose. The conversion has suitably been conducted in the presence of an acid catalyst. The humins have preferably been produced by the conversion of fructose and/or glucose in the presence of water, an alcohol or a carboxylic acid at a temperature in the range of 105 to 250 °C. For more details for such conversion reference is made to WO 2007/104514 and WO 20071104515. It has further been found that it may be advantageous to increase the number of hydroxyl groups in the humins. Such may be the case when the humins contain a large number of carbonyl groups. In such instances the humins are preferably subjected to a reduction reaction. In such a reduction reaction at least a portion of the carbonyl groups in the humins are reduced to hydroxyl groups. To achieve the reduction the humins may be subjected to hydrogenation, preferably over a metal-containing catalyst. The metal may be selected from the groups 8 to 10 of the Periodic Table of the Elements, such as nickel, cobalt, optionally comprising tungsten and/or molybdenum as additive. Alternatively, the metal-containing catalyst may comprise a metal of the platinum group of metals, such as platinum, ruthenium, palladium or rhodium. When the hydrogenation is carried out under rather severe conditions a variety of reductions may take place, including the hydrogenation of the furan rings in the humins. In order to prevent this from happening, the reduction of carbonyl groups may preferably be carried out by means of one or more metal hydrides. Suitable catalysts include the metal hydrides NaBH₄, NaAlH₄, LiAlH₄, LiBH₄, Zn(BH₄)₂ and Ca(BH₄)₂. When the humins comprise a sufficiently high number of hydroxyl groups no pretreatment with hydrogen or a metal hydride is needed.

The process according to the present invention is conducted in the presence of an organic aprotic solvent. It has been found that the presence of a solvent mitigates the tendency of the humins to form a solid cellular structure. It is further believed that due to the solvent the accessibility of the reactive compound to the desired functional groups in the humins is improved, thereby facilitating the reaction between the functional group and the reactive compound. The organic aprotic solvents may be selected from a wide range of compounds. These solvents may consist of compounds comprising only carbon and hydrogen atoms or may also contain one or more heteroatoms, such as one or more oxygen or nitrogen atoms. As the humins comprise several polar groups, such as hydroxyl, carboxyl and carbonyl and furyl groups, the organic solvent is suitably also polar. On the other hand, the modified humins tend to have an increased amount of apolar groups and especially when hydroxyl groups of the humins have been allowed to react with the reactive compound, they have a reduced content of polar hydroxyl groups. Therefore, the organic solvent is aprotic.

The organic aprotic solvent suitably comprises a heteroatom, in particular an oxygen atom. It is therefore feasible to use an ether as organic solvent. However, the use of ethers is not preferred as the majority of ethers have a low polarity so that the dissolution of humins in the ether is very limited. The organic solvent is preferably selected from the group consisting of aldehydes, ketones, carboxylic acid esters and combinations thereof. Although it is feasible to use alcohols, such as C₂ - C₆ alcohols as solvent, the use of alcohols is not envisaged. The drawback of these solvents reside in that they may react with a number of reactive compounds, such as carboxylic acids, carboxylic anhydrides and epoxy-containing compounds. They may thus react with the reactive compound used. Therefore, the organic aprotic solvent is suitably different from an alcohol, and preferably does not comprise an alcohol. Suitable organic solvents include aldehyde solvents, ketone solvents, amide solvents or ester solvents. The ester group in ester solvents may also be an internal ester group such as in a lactone. Such organic solvents may comprise from 1 to 8 carbon atoms. Thus, preferably, the organic aprotic solvent comprises one or more oxygen atoms, suitably being not in a hydroxyl group, and 1 to 8 carbon atoms. Suitable examples of these organic aprotic solvents are formaldehyde, acetaldehyde, acetone, methyl ethyl ketone, methyl isobutyl ketone, dimethyl formamide, diethyl formamide, acetamide, gamma-valerolactone, ethyl formate, propyl formate, methyl acetate, ethyl acetate, methyl levulinate, ethyl levulinate, and mixtures of two or more of these compounds. More preferably, the organic aprotic solvent is selected from the group consisting of aldehydes, ketones, carboxylic esters and combinations thereof. Therefore the solvent is suitably selected from the group consisting of acetone, methyl ethyl ketone, methyl iso-butyl ketone, gamma-valerolactone, ethyl formate, propyl formate, methyl acetate, ethyl acetate, methyl levulinate, ethyl levulinate, and combinations thereof.

Also the use of carboxylic acid esters, such as C₁-C₄-alkyl esters of C₁-C₄ carboxylic acids, e.g. methyl formate, ethyl acetate, as organic solvent is feasible. When an ester is used as organic aprotic solvent the ester solvent may undergo transesterification, which involves a saponification reaction of the ester solvent followed by an esterification reaction of the carboxylic acid that results from the saponification, with a hydroxyl group in the humins macromolecule. Although these reactions are generally performed in the presence of a dedicated catalyst to enhance the reaction rate they also proceed without the use of a catalyst. Hence, when an ester is used as solvent some transesterification reactions may occur, albeit at a low reaction rate. It is expected that the carboxylic acid formed from the ester reacts with the humins macromolecule. Hence, the carboxylic acid component of the ester may be retrieved as acyl moiety in the modified humins. This is generally not a problem, as the proportion will be low in view of the slow reactions, and, further, the conversion of the hydroxyl group of the humins macromolecule into an ester group has an advantageous effect on the hydrophobicity of the modified humins.

Therefore, aldehydes, ketones and their combinations are especially preferred Suitable aldehydes and ketones have 2 to 12 carbon atoms. These compounds tend to be liquid and their boiling points in many instances are such that reflux conditions may be applied which provide the desired temperature for the conversion. Suitable aldehydes include acetaldehyde, propanal, butanal, pentanal and mixtures thereof. Suitable ketones include acetone, methyl ethyl ketone, methyl isobutyl ketone, diethyl ketone, and combinations thereof.

The skilled person will understand that the humins before the contact with the reactive compound may not completely dissolve in the organic aprotic solvent used. However, the modified humins will at least partly dissolve in the organic solvent.

The amount of aprotic solvent may vary within wide ranges. The skilled person will seek a balance between a sufficient volume of solvent and dissolution of humins to achieve a good accessibility of the reactive compound to the functional groups in the humins on the one hand, and a satisfactorily small amount of solvent to reduce the required heat input for achieving the desired conversion and also to avoid unnecessary effort for the separation of the organic solvent from the modified humins on the other hand. Suitably the amount of organic aprotic solvent is in the range of 1 to 50 mL, preferably from 2 to 20 mL, more preferably from 5 to 10 mL organic aprotic solvent per gram humins.

When the humins and the reactive compound have been brought into contact a humins-containing admixture is obtained. This admixture is then maintained at elevated temperature to achieve the reaction between the reactive compound and the humins, in particular the reaction with functional groups in the humins. The temperature may be selected such that the organic solvent and the reactive compounds are liquid. Evidently, it is preferable that the reaction pressure is atmospheric so that no pressure vessel is required to carry out the conversion. The reaction temperature suitably is in the range of 50 to 250 °C, preferably in the range of 50 to 180 °C, more preferably in the range of 60 to 100°C. At temperatures above 180 °C, and at a significant rate above 250 °C, humins macromolecules are subjected to auto-crosslinking reactions, and the humins may even start to degrade and start forming solid cellular carbonaceous products. At temperatures below 50 °C the reaction of the reactive compound with the humins takes place very slowly. In order to avoid any risk of auto-crosslinking and degradation of the modified humins the contact of the humins-containing admixture is preferably above 50 °C and below 150 °C, e.g. at most 145 °C.

Although atmospheric pressure is preferred, elevated pressures are also feasible. Therefore, the reaction pressure is preferably in the range of 1 to 15 bar. If the pressure is below 1 bar the organic solvent may start boiling at an undesirably low temperature. If the pressure is above 15 bar unnecessary costs and effort are to be incurred without any significant advantage. The humins-containing admixture is suitably maintained at the elevated temperature for a period in the range of 0.2 to 6 h. When the temperature is selected at the lower part of the preferred range, the reaction time may be prolonged. Alternatively, if the reaction temperature is at the higher end of the range, the reaction time may be shortened. This is the more so when the conversion does not need to be complete, and when a partial conversion of the humins is already satisfactory.

The modified humins are recovered after the conversion and washing of the humins-containing admixture. The recovery of the modified humins can take place in a variety of well-known methods. Such methods include liquid-liquid separation by phase separation of the modified humins from the organic solvent. Such may be accomplished by adding an anti-solvent to the conversion product. An example would be to add water or an aqueous medium to the conversion product. This method has as drawback that the organic solvent and the anti-solvent are obtained as a mixture. If the solvent is to be re-used in the process, a separation of the solvent from the anti-solvent is then required. An advantage of washing with an aqueous washing liquid such as water or another aqueous medium resides in that any organic salts that are present in the humins may be dissolved in the aqueous washing liquid. A very convenient way to recover the modified humins is by evaporation of the organic aprotic solvent. Especially when the organic solvent has a relatively low boiling point, this manner is advantageous.

As indicated above, the modified humins that are obtained show an increased hydrophobicity, compared with the humins that were used as starting material. The modified humins are therefore more easily treated with aqueous washing liquid. It is relatively easy to subject the modified humins to a washing treatment to remove any remaining water-soluble components that are left in the modified humins. The aqueous washing liquid is suitably water. However, if it is expected that acidic components are left in the modified humins the aqueous washing liquid may be alkaline to facilitate the removal of these acidic components. The pH of the washing liquid may then be in the range of 7 to 12. Alternatively, if basic components are left in the modified humins, the washing liquid may suitably be acidic, e.g. having a pH of 2 to 7. The washing treatment may be conducted on the modified humins *per se.* It is also possible to wash a solution of the modified humins in a water-immiscible solvent. If the organic aprotic solvent that has been used for forming the humins-containing admixture is not miscible with water, this may be used for washing the modified humins formed, after which the modified humins are recovered. However, such a treatment has the disadvantage that any non-reacted reactive component may also be taken up in the aqueous washing liquid with the risk that such reactive compound is difficult to recover. Preferably, the modified humins are taken up in a water-immiscible solvent and the solution obtained is then subjected to liquid-liquid extraction with the aqueous washing liquid. After separation of the aqueous phase from the solvent phase the solvent may be separated from the modified humins, e g. by evaporation, so that purified modified humins are obtained.

The modified humins obtainable by the process according to the present invention are advantageous products. The modified humins are less hydrophilic, so that they become more suitable as versatile fuels. That is because the modified humins according to the present invention suitably have a complex viscosity of at most 50 Pa.s at 60 °C at a frequency of 10 Hz, as determined in accordance with ASTM D7175 using an Anton Paar MCR 102 rheometer. Preferably, the complex viscosity, thus determined, is at most 45 Pa.s, more preferably at most 40 Pa.s. Typically the complex viscosity at 60 °C and determined at 10 Hz, in accordance with ASTM D7175, is at least 5 Pa.s. Hence, the complex viscosity of the modified humins is suitably in the range of 5 to 50 Pa.s, preferably from 5 to 40 Pa.s. The property renders the modified humins suitable as liquid fuel, e.g. as a residual fuel as defined in ASTM D396. Such use is similar to the use of mixtures of humins with an organic oxygenated solvent as described in WO2016/130005.

However, the modified humins are not only suitable as fuel or fuel component. The modified humins may also be used in foundry applications as foundry resin. In a shell molding process for the production of sand molds for the casting of metals a mixture of sand and a thermosetting foundry resin is deposited against a heated pattern such that the resin cures to form a rigid shell mold or core section for use in the casting of metals. Similar to lignin-containing foundry resins as disclosed in US5786409, it has been found that the sodium content of humins-containing foundry resins, has a detrimental effect on the quality of the sand cores and sand molds, prepared with humins as foundry resin. The modified humins can easily be washed with water or any other aqueous medium to remove sodium salts, such as sodium chloride, and other inorganic salt components. Accordingly, any of the modified humins obtained by the process according to the present invention suitably comprises at most 1000 ppmw, preferably from 10 to 1000 ppmw, more preferably from 50 to 700 ppmw sodium, based on the weight of the modified humins. Due to the low sodium content the modified humins can be used for several purposes, including as liquid fuel and foundry resin.

The modified humins can also be used to impregnate wood, fabric, paper. The application of the modified humins in the impregnation of wood has the beneficial aspect that the modified humins provide an environmentally-friendly protective layer. Different from painted or treated wood, which is considered chemical waste, wood that is impregnated with modified humins is environmentally safe and can be composted or recycled.

Modified humins according to some embodiments are characterized by the fact that they comprise furyl groups and that they further comprise acyl moieties derived from a reactive compound selected from the group consisting of a carboxylic acid, an acyl halide, and a carboxylic anhydride. The modified humins may further comprise other moieties such as levulinate and/or carbohydrate moieties. The furyl moieties may be present in the form of furfuryl or methylfurfuryl groups. The modified humins according to this embodiment contain ester groups. These ester groups may be attached to the furyl rings or to methylfuryl groups. Alternatively, ester groups may be linked to a carbohydrate moiety and may be the result of a reaction between a hydroxyl group of the carbohydrate moiety with a carboxylic acid or anhydride, an acyl chloride or a carboxylic acid ester. Suitably the acyl moieties are the residues of carboxylic acids having a number of carbon atoms in the range of 1 to 25 carbon atoms. Preferably the acyl moieties are selected from formyl, acetyl, propionyl, butyryl groups and combinations thereof. Acetyl groups are particularly preferred as modified humins having such acyl groups show an excellent solubility in various organic solvents and also show an excellent viscosity behavior.

Modified humins also show a surprising property. They are electrically conductive. This property may render them suitable for use in applications wherein other electrically conductive polymers may be used. It has further been found that when the modified humins are subjected to a heat treatment, i.e. an exposure to heat of about 200 to 500 °C, solidification of the modified humins occur which have an increased electrical conductivity.

It has surprisingly been found that modified humins that comprise furyl groups and further comprise acyl moieties that are residues of succinic acid show a particularly increased conductivity. When humins are contacted with succinic anhydride at elevated temperature, a viscous product is obtained. At increasing temperature the viscosity of the resulting product is also enhanced. The modified humins that are thus obtained already show an interesting electric conductivity. It has been shown that when the recovered modified humins are subjected to the above-mentioned heat treatment, e.g. when they are further heated to a temperature above 250 °C up to 450 °C, the modified humins further react and a shiny grey solid product is obtained which shows enhanced electrically conductive properties after such carbonization. Modified humins in general and succinate-modified humins in particular are therefore suitable for applications wherein also other conductive polymers can be used, such as in organic solar cells, printing electronic circuits, organic light-emitting diodes, actuators, electrodes, in particular sacrificial electrodes, electrochromism, supercapacitors, chemical sensors and biosensors, flexible transparent displays, electromagnetic shielding and for microwave-absorbent coatings. It would seem that they may be very useful for application as dyes in solar cells. The effect is very sustainable and does not appear to deteriorate over time. It appears that the succinate-modified humins absorb radiation in the visible area, as shown by UV spectroscopy analysis. The modified humins may be grafted on a substrate, e.g. titanium dioxide, before or after the heat treatment. When the modified humins are grafted on a substrate, e.g., TiO₂, the grafted material may be subjected to a further heat treatment at e.g. a temperature of up to 450 °C. Alternatively, the modified humins may be subjected to such heat treatment and the solid product obtained may be grafted onto the substrate. In view of their properties the materials obtained could be used in dye-sensitized solar cells. Therefore the invention also relates to the use of humins that comprise acyl moieties that are residues of succinic acid as photosensitizer in dye-sensitized solar cells.

The modified humins comprise succinyl moieties in addition to the furyl moieties. Each residue of succinic acid may be linked to one or two chains in the humins. When the modified humins has been subjected to a further heat treatment to obtain a solid conductive material, a product is obtained wherein succinic acid residues have reacted with two hydroxyl groups, creating a condensed product. Without wishing to be bound by any theory, it is believed that during the heat treatment also radical formation takes place that result in internal rearrangement of the humins macromolecules. Thereby polycyclic aromatic rings and combinations of conjugated bonds are formed in the macromolecules, which may provide the electric conductivity observed.

in another embodiment of the present disclosure the modified humins comprise furyl groups and in addition further comprise phenyl or oxa-[2,2,1]-bicycloheptenyl groups derived from a reactive compound. These modified humins are the result of a Diels Alder reaction from the furan rings in the humins with a dienophile provided by an olefin as reactive compound. The contact between the furan rings and the olefinic double bond leads to a Diels Alder reaction, similar to the reaction described in e.g. WO 2013/048248. It is known that a furan ring and a dienophile may react to an oxa-[2,2,1]-bicycloheptene compound. The bicyclic ether obtained may be dehydrated with concurrent dehydrogenation to form a phenyl ring. Although such a dehydration reaction may be catalyzed via the use of a specific catalyst, the reaction may also proceed without the use of a catalyst. The modified humins according to the present disclosure may therefore comprise phenyl groups or oxa-bicycloheptenyl groups. Dependent on the chain length of the olefin used as reactive compound, the modified humins comprise a phenyl or oxa-bicycloheptenyl group comprising a substituent. The reaction makes it also possible to obtain aromatic compounds from such modified humins. To obtain the aromatic compounds the modified humins macromolecules are decomposed e.g. by exposure to acids or bases, in particular strong acidic or strong alkali solutions. The olefin that is preferably used as reactive compound in the derivatization of humins suitably comprises from 4 to 20 carbon atoms, preferably from 4 to 8 carbon atoms. The substituent or substituents on the resulting phenyl or oxa-bicycloheptenyl group may thus suitably have a total number of carbon atoms of 2 to 18, preferably of 2 to 6. Especially when the olefin is a hydrocarbon the resulting modified humins have a good solubility in apolar organic solvents such as toluene. This renders these modified humins excellently suitable for use as liquid fuel. In a further embodiment the modified humins comprise, in addition to furyl groups, also ether moieties derived from a reactive compound selected from epoxy-group containing compounds. The epoxy group reacts with hydroxyl groups in the humins thereby binding the rest of the epoxy-group containing compound to the humins chains, thereby forming an ether bond. When the epoxy-group containing compound comprises a hydrophobic moiety, the resulting modified humins may thus also obtain a higher hydrophobicity. That will facilitate the removal of any water-soluble component from the humins. Moreover, the modified humins are better suitable as fuel or for any other purpose. The epoxy-group containing compound that may be used as reactive compound is suitably selected from the group consisting of C₁₋C₆ alkyl glycidyl ethers, bisphenol A diglycidyl ethers, glycidyl esters of C₁₋C₆ carboxylic acids, epoxidized vegetable oils and combinations thereof. If an epoxidized vegetable oil is used, the oil is suitably epoxidized sunflower oil or epoxidized linseed oil.

The invention will be further illustrated by means of the following examples.

### EXAMPLE 1

Humins obtained from the dehydration of fructose with methanol in the presence of sulfuric acid by means of a method described in WO 2007/104514, were used in a number of experiments. The humins contained some sodium and sulfur residues from the dehydration reaction and neutralization with sodium hydroxide.

A round-bottom flask equipped with a reflux condenser and mechanical stirrer was charged with a quantity of these humins and a quantity of ethyl acetate (boiling point 77.1°C) in an amount of 2.5 ml ethyl acetate per gram humins. Under mechanical stirring the mixture was heated to a reflux temperature to obtain a homogeneous dispersion. Then acetic anhydride was added in a ratio to the humins as indicated in Table 1, the temperature was maintained at reflux temperature (about 80 °C), and the reaction was continued for 3 h.

The reaction mixture showed that the product obtained was soluble in ethyl acetate. The reaction mixture was washed with water, creating two liquid phases which were separated in a separation funnel. The wash treatment was done three times. The organic phase was evaporated yielding the modified humins.

The solubility of the modified humins was tested in a variety of solvents at 90 °C. When less than 1 mg/ml of the modified humins dissolved in the solvent at 90 °C, it was considered insoluble.

The modified humins appeared to be insoluble in water, toluene. They were soluble in acetone, ethyl acetate and tetrahydrofuran.

Some of the modified humins were subjected to elemental analysis to determine the amount of sodium and sulfur in the modified humins. For comparison reasons also the original amount of Na and S in the starting humins was determined.

The results are shown in Table 1. Table 1 shows the Experiment No., the amount of acetic anhydride added, based on the amount of starting humins (expressed as AcA, g/g), the amounts of sodium and sulfur of the starting humins (expressed as Na₀ and S₀, in %wt), the amounts of sodium and sulfur in the modified humins (expressed as Naₘ and Sₘ, in %wt), the η₀ and the nₘ, expressed in Pa.s.

**Table 1**

| Ex. No. | AcA, g/g | Na₀, %wt | S₀, %wt | Naₘ, %wt | Sₘ, %wt |
|---|---|---|---|---|---|
| 1 | 0.22 | 1.4 | 0.2 | 0.035 | 0.004 |
| 2 | 0.12 | 1.4 | 0.2 | 0.034 | 0.004 |

Some other experiments were conducted in the same way as experiments 1 and 2, with the exception that the weight ratio of acetic anhydride to humins was varied; the weight ratios used were 0.31 g/g, 0.43 g/g and 0.53 g/g. The other reaction conditions were the same. The results were similar to those obtained in experiment Nos. 1 and 2.

### EXAMPLE 2

Experiment No. 2 was repeated with three different humins. The humins were all obtained in the dehydration of sugars, in one instance the sugars consisted of 93 %wt fructose and 7 %wt glucose (experiment No. 3), and in two instances the sugars consisted of fructose only (experiment Nos. 4 and 5). The procedure as described for Experiment No. 2 was repeated in all of Experiment Nos. 3 to 5.

The complex viscosity at 60, 80, 100 and 120°C at an angular frequency from 6.28 to 628 rad/s (1-100 Hz) was determined in accordance with ASTM D7175 using an Anton Paar MCR 102 rheometer. The measurements were made for the starting humins (η₀) and the modified humins obtained (ηₘ).

The results are shown in Table 2. Table 2 shows the Experiment No., the amount of acetic anhydride added, based on the amount of starting humins (expressed as AcA, g/g), the η₀ and the ηₘ, expressed in Pa.s, and determined at 60 °C at 10 Hz and 100 Hz.

**Table 2**

| Exp. No. | AcA, gig | η₀, Pa.s, 10 Hz | η₀, Pa.s, 100 Hz | ηₘ, Pa.s, 10 Hz | ηₘ, Pa.s, 100 Hz |
|---|---|---|---|---|---|
| 3 | 0.22 | 68.6 | 73.6 | 8.2 | 10.6 |
| 4 | 0.22 | 254 | 264 | 34.9 | 36.6 |
| 5 | 0.22 | 41.5 | 55.9 | 11.8 | 15.7 |

The results show that when different humins are taken as starting material the viscosities of the modified humins are considerably reduced, compared to those of the starting humins.

### COMPARATIVE EXAMPLE 1

The humins that were used in Example 1 were contacted with water in an attempt to remove sodium and sulfur. A two-phase mixture of transparent water and black humins was mixed with a mechanical stirrer at room temperature to obtain a black dispersion of humins in water. The dispersion was left to settle. However, after two days a mixture was obtained comprising an aqueous phase that was black, an intermediate phase comprising a dispersion of humins and water and a humins phase comprising a significant proportion of water. This experiment showed that separation of the humins from the water was not practical. Washing humins to selectively remove inorganic salts, such as sodium and sulfur salt components appeared unsuccessful.

### EXAMPLE 3

A round-bottom flask equipped with a reflux condenser and mechanical stirrer was charged with 25 g of humins and 20 mL acetone. Under stirring the mixture was heated to reflux to obtain a dispersion of humins in acetone (boiling point 56 °C). A quantity of 0.25 mL of valeric anhydride (about 0.24 g) was added and the reaction was continued under reflux (about 60 °C) for 4 h. Subsequently, the acetone was evaporated and the modified humins obtained were a viscous fluid, soluble in acetone and insoluble in water.

### EXAMPLE 4

A round-bottom flask equipped with a reflux condenser and mechanical stirrer was charged with 10 g of humins and 10 mL acetone. Under stirring the mixture was heated to reflux temperature to obtain a dispersion of humins in acetone. A quantity of 0.8 g of stearic anhydride was added and the reaction was continued at under reflux for 3 h. Then the acetone was evaporated whereafter the final amount of acetone was removed at 30 °C in a vacuum oven. Modified humins were obtained as a viscous liquid that was soluble in acetone.

### EXAMPLE 5

A round-bottom flask equipped with a reflux condenser and mechanical stirrer was charged with 25 g of humins and 25 mL of acetic acid. Acetic acid was used as both solvent and reactive compound. Under stirring the mixture was heated to reflux and the reaction was then continued under reflux for 4 h. The acetic acid was removed via evaporation under reduced pressure and subsequently by drying the modified humins in a vacuum oven at 40 °C overnight. Modified humins were recovered as a viscous liquid, soluble in acetone, but insoluble in water or toluene.

### EXAMPLE 6

A round-bottom flask equipped with a reflux condenser and mechanical stirrer was charged with 11 g of humins and 10 mL of acetone. Under stirring the mixture was heated to reflux temperature to obtain a dispersion of humins in acetone. A quantity of 1 g of sebacic acid was added. The reaction mixture was heated to reflux in about 1 h and the reaction was continued under reflux for 3 h. Then the acetone was removed by evaporation, whereafter the final amount of acetone was removed at 30 °C in a vacuum oven. Modified humins were obtained as a viscous liquid that was soluble in acetone.

### EXAMPLE 7

A round-bottom flask equipped with a reflux condenser and mechanical stirrer was charged with 10 g of humins and 10 mL of acetone. Under stirring the mixture was heated to obtain a dispersion of humins in acetone. A quantity of 0.1 g of stearoyl chloride was added. The reaction mixture was further heated to reflux and the reaction was continued under reflux for 3 h. Then the acetone was removed by evaporation. Modified humins were obtained as a viscous liquid that was soluble in acetone.

### EXAMPLE 8

The dipropylene glycol ester of maleic anhydride was prepared by reacting dipropylene glycol and maleic anhydride in a molar ratio of 1:2 under nitrogen at 100 °C for 3 h. The obtained product was a yellow liquid.

A round-bottom flask equipped with a reflux condenser and mechanical stirrer was charged with 10 g of humins and 5 mL of isopropanol (boiling point 82.6 °C). Under stirring the mixture was heated to reflux temperature to obtain a dispersion of humins. Then 5 g of dipropylene glycol maleate ester as described hereinabove was added, and the reaction was conducted at reflux temperature for 3 h. Isopropanol was evaporated and the modified humins obtained were recovered as viscous liquid. The product is soluble in alcohols, acetone and ethyl acetate.

### COMPARATIVE EXAMPLE 2

A round-bottom flask equipped with a reflux condenser and mechanical stirrer was charged with 22 g of humins and 1 mL of water. Under stirring the mixture was heated to its boiling point to obtain a colloidal mixture of humins. Then a quantity of 2.5 g of a 20%wt solution of maleic anhydride in water was added. The reaction mixture was heated to maintain reflux for about 1 h. The product precipitated at the end of the reaction. The water was removed by phase separation. Modified humins were obtained as a massive solid material. This material was insoluble in any of the solvents above, indicating that the product has been subject to auto-crosslinking in the presence of maleic acid.

### EXAMPLE 9

A round-bottom flask equipped with a reflux condenser and mechanical stirrer was charged with 18 g of humins and 22 mL of acetone. Under stirring the mixture was heated to obtain a dispersion of humins in acetone. A quantity of 1.8 g of epoxidized linseed oil was added. The reaction mixture was further heated to reflux and the reaction was continued at reflux for 3 h. Modified humins were obtained as a viscous product that was dissolved in acetone. Then the acetone was removed by evaporation.

When the product obtained was put in an oven at 150 °C for 2 h, the material appeared to start crosslinking and a final solid product was obtained that was insoluble in any of the solvents mentioned above.

### EXAMPLE 10

A round-bottom flask equipped with a reflux condenser and mechanical stirrer was charged with 20 g of humins and 20 mL of ethyl acetate. The mixture was stirred at reflux temperature to obtain a dispersion of humins in ethyl acetate. A quantity of 10 mL of 1-hexene (6.7 g) was added and the reaction was allowed to proceed at reflux temperature (about 80 °C) for up to 4 hours. The solution was allowed to cool to ambient temperature. The modified humins obtained appeared soluble in ethyl acetate.

An additional amount of 20 mL of ethyl acetate was added. The obtained mixture was introduced into a separation funnel and was washed three times with water. The organic phase was subjected to evaporation to remove the ethyl acetate, yielding a viscous product.

### EXAMPLE 11

A round-bottom flask equipped with a reflux condenser and mechanical stirrer was charged with 22 g of humins and 7 mL of acetone. Under stirring the mixture was heated to reflux temperature to obtain a dispersion of humins in acetone. A quantity of 2.12 g of succinic anhydride was added and the reaction was continued for 3 h whilst maintaining reflux conditions. Then the acetone was evaporated wherein the final amount of acetone was removed at 30 °C in a vacuum oven. Modified humins were obtained as a viscous liquid that was soluble in acetone. It was tested and showed photosensitizer activity in dye-sensitized solar cells (DSSC).

### EXAMPLE 12

A round-bottom flask equipped with a reflux condenser and mechanical stirrer was charged with 22 g of humins and 20 mL of acetone. Under stirring the mixture was heated to reflux temperature to obtain a dispersion of humins in acetone. A quantity of 0.25 g of succinic acid was added and the reaction was continued at reflux temperature for 3 h. Then the acetone was evaporated wherein the final amount of acetone was removed at 30 °C in a vacuum oven. Modified humins were obtained as a viscous product that was soluble in acetone.

### EXAMPLE 13

The modified humins obtained in Example 10 were introduced into an oven that was kept at 450 °C, and the modified humins were exposed to this temperature for 2 min. A solid light structure was obtained.

When a voltammogram was determined for this solid structure it was found that a current was found as a function of the potential, indicating that the material is conductive. This is contrary to e.g. hydrothermally synthesized carbon, which does not provide a current as a function of potential.

### EXAMPLE 14

Two humins compositions A and B, having been obtained from sugar with methanol in the presence of sulfuric acid by means of a method described in WO 2007/104514, were used in a number of experiments. Composition A has been obtained from the dehydration of fructose and composition B has been obtained from the dehydration of a mixture of fructose and glucose. The humins compositions contained some sodium and sulfur residues from the dehydration reaction and neutralization with sodium hydroxide. In addition, the humin compositions contained some compounds that were produced in the dehydration reactions. Such compounds included hydroxymethyl furfural (HMF), methoxymethyl furfural (MMF), acetoxymethyl furfural (AMF) and glycosides.

To carry out an acetylation reaction, a round-bottom flask equipped with a reflux condenser and mechanical stirrer was charged with a quantity of the humin composition (960 for composition A and 955 g for composition B) and a quantity of ethyl acetate in a ratio of 2.5 mL of ethyl acetate per gram of humins composition. Under mechanical stirring the resulting mixture was heated to reflux. After apparent dissolution 200 mL of acetic acid anhydride was added, the temperature was maintained at reflux temperature, and the reaction was continued for 2.5 h. The still warm reaction mixture was washed with water and subsequently with a saturated NaCl and Na₂SO₄ solution. Finally, the remaining organic solvent was removed was removed at 40 °C in a vacuum oven. The acetylated humins were analyzed for residual compounds as well as sodium and sulfur. It appeared that the acetylation reaction renders the humins compositions water-insoluble whereby the compounds can be more easily separated.

Table 3 shows the composition of the starting humins compositions used. The compositions show the relative amounts of HMF, MMF, AMF and glycosides (expressed as weight percent based on the humins composition), as well as the elemental analysis, expressed as weight percent based on the humins composition).

After the acetylation reaction the same properties were again analyzed. Humins composition A resulted in modified humins composition A' and humins composition B resulted in modified humins composition B'. The results thereof are shown in Table 4.

**Table 3**

| Component | Humins composition A | Humins composition B |
|---|---|---|
| Feed | Fructose | Fructose/glucose 93/7 w/w |
| HMF, %wt | 11.8 | 11.0 |
| MMF, %wt | 2.3 | 2.0 |
| AMF, %wt | 0.01 | 0.01 |
| Glycosides, %wt | 1.8 | 25.2 |
| C, %wt | 57.9 | 53.6 |
| H, %wt | 5.3 | 5.9 |
| O, %wt | 35.6 | 40.2 |
| Na, %wt | 0.41 | 0.33 |
| S, %wt | 0.29 | 0.20 |

**Table 4**

| Component | Modified humins composition A' | Modified humins composition B' |
|---|---|---|
| HMF, %wt | 5.2 | 5.0 |
| MMF, %wt | 2.4 | 3.2 |
| AMF, %wt | 5.9 | 7.6 |
| Glycosides, %wt | 0.2 | 0.0 |
| C, %wt | 58.3 | 59.9 |
| H, %wt | 5.2 | 5.1 |
| O, %wt | 34.9 | 35.1 |
| Na, ppmw | 569 | 312 |
| S, ppmw | <50 | <50 |

For these four compositions the rheological properties were determined in accordance with ASTM D7175 using an Anton Paar MCR 102 rheometer. The complex viscosities (η₀ for the starting humins composition and (ηₘ) for the modified humins composition obtained) are expressed in Pa.s, and determined at 60 °C at 10 and 100 Hz, are shown in Table 5.

**Table 5**

| Comp. A, η₀, Pa. s | | Comp. B, η₀, Pa. s | | Comp. A', ηₘ Pa.s | | Comp. B', ηₘ. Pa.s | |
|---|---|---|---|---|---|---|---|
| 10 Hz | 100Hz | 10Hz | 100Hz | 10 Hz | 100 Hz | 10Hz | 100Hz |
| 254 | 342 | 68.6 | 73.6 | 16.8 | 21.9 | 16.7 | 22.3 |

## Claims

1. Process for the modification of humins and removing water-soluble components therefrom comprising:
- contacting humins with a reactive compound selected from the group consisting of a carboxylic acid, an acyl halide, a carboxylic anhydride, an olefin, an epoxy-group containing compound and combinations thereof in the presence of an organic aprotic solvent to obtain a humins-containing admixture;
- maintaining the humins-containing admixture at elevated temperature to achieve a reaction between the humins and the reactive compound, thereby obtaining modified humins;
- washing the modified humins with an aqueous washing liquid; and
- recovering the modified humins.

2. Process according to claim 1, wherein the reactive compound is selected from the group consisting of a carboxylic acid with a number of carbon atoms of 1 to 25, an acyl halide with a number of carbon atoms of 1 to 25, a carboxylic anhydride with acyl groups having a number of carbon atoms of 2 to 25, an olefin having a number of carbon atoms of 4 to 20, an epoxy-group containing compound selected from the group consisting of C₁₋C₆ alkyl glycidyl ethers, bisphenol A diglycidyl ethers, glycidyl esters of C₁₋C₆ carboxylic acids, epoxidized vegetable oils and combinations thereof.

3. Process according to claim 2, wherein the carboxylic anhydride is selected from a C₂-C₆ carboxylic anhydride, in particular from acetic anhydride and succinic anhydride.

4. Process according to claim 1 or 2, wherein the reactive compound comprises an olefin having from 4 to 8 carbon atoms.

5. Process according to claim 4, wherein the olefin is selected from the group consisting of butenes, pentenes, hexenes, heptenes, octenes and combinations thereof.

6. Process according to any one of claims 1 to 5, wherein the organic aprotic solvent is selected from the group consisting of aldehydes, ketones, carboxylic acid esters and combinations thereof.

7. Process according to claim 6, wherein the organic aprotic solvent is selected from the group consisting of acetone, methyl ethyl ketone, methyl iso-butyl ketone, gamma-valerolactone, ethyl formate, propyl formate, methyl acetate, ethyl acetate, methyl levulinate, ethyl levulinate, and combinations thereof.

8. Process according to any one of claims 1 to 7, wherein the amount of organic aprotic solvent is in the range of 1 to 50 mL, organic aprotic solvent per gram humins.

9. Process according to any one of claims 1 to 8, wherein the amount of reactive compound per amount of humins is from 0.001 to 1.0 g reactive compound per g humins.

10. Process according to any one of claims 1 to 9, wherein the humins-containing admixture is maintained at a temperature in the range of 50 to 250 °C.

11. Process according to any one of claims 1 to 10, wherein the humins-containing admixture is maintained at elevated temperature for a period in the range of 0.2 to 6 h.

12. Process according to any one of claims 1 to 11, wherein the modified humins are taken up in a water-immiscible solvent and the solution obtained is then subjected to liquid-liquid extraction with the aqueous washing liquid.

## Patentansprüche

1. Verfahren zur Modifizierung von Huminen und Entfernung von wasserlöslichen Komponenten daraus umfassend:
- Inkontaktbringen von Huminen mit einer reaktiven Verbindung, ausgewählt aus der Gruppe bestehend aus einer Carbonsäure, einem Acylhalogenid, einem Carbonsäureanhydrid, einem Olefin, einer Verbindung, die eine Epoxygruppe enthält, und Kombinationen davon, in Gegenwart eines organischen aprotischen Lösungsmittels, um eine huminhaltige Mischung zu erhalten;
- Halten der huminhaltigen Mischung bei erhöhter Temperatur, um eine Reaktion zwischen den Huminen und der reaktiven Verbindung zu erreichen, wodurch modifizierte Humine erhalten werden;
- Waschen der modifizierten Humine mit einer wässrigen Waschflüssigkeit; und
- Gewinnung der modifizierten Humine.

2. Verfahren nach Anspruch 1, wobei die reaktive Verbindung ausgewählt ist aus der Gruppe, bestehend aus einer Carbonsäure mit einer Anzahl an Kohlenstoffatomen von 1 bis 25, einem Acylhalogenid mit einer Anzahl an Kohlenstoffatomen von 1 bis 25, einem Carbonsäureanhydrid mit Acylgruppen mit einer Anzahl von Kohlenstoffatomen von 2 bis 25, einem Olefin mit einer Anzahl von Kohlenstoffatomen von 4 bis 20, einer eine Epoxygruppe-enthaltenden Verbindung, ausgewählt aus der Gruppe bestehend aus C₁-C₆-Alkylglycidylethern, Bisphenol-A-diglycidylethern, Glycidylestern von C₁-C₆-Carbonsäuren, epoxidierten Pflanzenöle und Kombinationen davon.

3. Verfahren nach Anspruch 2, wobei das Carbonsäureanhydrid ausgewählt ist aus einem C₂-C₆-Carbonsäureanhydrid, insbesondere aus Essigsäureanhydrid und Bernsteinsäureanhydrid.

4. Verfahren nach Anspruch 1 oder 2, wobei die reaktive Verbindung ein Olefin mit 4 bis 8 Kohlenstoffatomen umfasst.

5. Verfahren nach Anspruch 4, wobei das Olefin ausgewählt ist aus der Gruppe bestehend aus Butenen, Pentenen, Hexenen, Heptenen, Octenen und Kombinationen davon.

6. Verfahren nach einem der Ansprüche 1 bis 5, wobei das organische aprotische Lösungsmittel ausgewählt ist aus der Gruppe bestehend aus Aldehyden, Ketonen, Carbonsäureestem und Kombinationen davon.

7. Verfahren nach Anspruch 6, wobei das organische aprotische Lösungsmittel ausgewählt ist aus der Gruppe bestehend aus Aceton, Methylethylketon, Methylisobutylketon, Gamma-Valerolacton, Ethylformiat, Propylformiat, Methylacetat, Ethylacetat, Methyllävulinat, Ethyllävulinat und Kombinationen davon.

8. Verfahren nach einem der Ansprüche 1 bis 7, wobei die Menge an organischem aprotischem Lösungsmittel im Bereich von 1 bis 50 ml organisches aprotisches Lösungsmittel pro Gramm Humin liegt.

9. Verfahren nach einem der Ansprüche 1 bis 8, wobei die Menge an reaktiver Verbindung pro Menge an Huminen von 0,001 bis 1,0 g an reaktiver Verbindung pro g Humine beträgt.

10. Verfahren nach einem der Ansprüche 1 bis 9, wobei die huminhaltige Mischung bei einer Temperatur im Bereich von 50 bis 250°C gehalten wird.

11. Verfahren nach einem der Ansprüche 1 bis 10, wobei die huminhaltige Mischung für einen Zeitraum im Bereich von 0,2 bis 6 h bei erhöhter Temperatur gehalten wird.

12. Verfahren nach einem der Ansprüche 1 bis 11, wobei die modifizierten Humine in einem mit Wasser nicht mischbaren Lösungsmittel aufgenommen werden und die erhaltene Lösung anschließend einer Flüssig-Flüssig-Extraktion mit der wässrigen Waschflüssigkeit unterzogen wird.

## Revendications

1. Procédé de modification d'humines et d'élimination de leurs composants hydrosolubles comprenant les étapes de :
- contacter des humines avec un composé réactif choisi dans le groupe constitué d'un acide carboxylique, d'un halogénure d'acyle, d'un anhydride carboxylique, d'une oléfine, d'un composé contenant un groupe époxy et de leurs combinaisons en présence d'un solvant organique aprotique pour obtenir un mélange contenant des humines ;
- maintenir le mélange contenant des humines à une température élevée pour réaliser une réaction entre les humines et le composé réactif, obtenant ainsi des humines modifiées ;
- laver les humines modifiées avec un liquide de lavage aqueux ; et
- récupérer les humines modifiées.

2. Procédé selon la revendication 1, dans lequel le composé réactif est choisi dans le groupe constitué d'un acide carboxylique avec un nombre d'atomes de carbone allant de 1 à 25, un halogénure d'acyle avec un nombre d'atomes de carbone allant de 1 à 25, un anhydride carboxylique avec des groupes acyles ayant un nombre d'atomes de carbone allant de 2 à 25, une oléfine ayant un nombre d'atomes de carbone allant de 4 à 20, un composé contenant un groupe époxy choisi dans le groupe constitué d'éthers glycidyliques d'alkyle en C₁ à C₆, d'éthers diglycidyliques de bisphénol A, d'esters glycidyliques d'acides carboxyliques en C₁ à C₆, d'huiles végétales époxydées et leurs combinaisons.

3. Procédé selon la revendication 2, dans lequel l'anhydride carboxylique est choisi parmi un anhydride carboxylique en C₂ à C₆, en particulier parmi de l'anhydride acétique et de l'anhydride succinique.

4. Procédé selon la revendication 1 ou 2, dans lequel le composé réactif comprend une oléfine ayant de 4 à 8 atomes de carbone.

5. Procédé selon la revendication 4, dans lequel l'oléfine est choisie dans le groupe constitué de butènes, pentènes, hexènes, heptènes, octènes et leurs combinaisons.

6. Procédé selon l'une quelconque des revendications 1 à 5, dans lequel le solvant organique aprotique est choisi dans le groupe constitué d'aldéhydes, de cétones, d'esters d'acides carboxyliques et de leurs combinaisons.

7. Procédé selon la revendication 6, dans lequel le solvant organique aprotique est choisi parmi le groupe constitué d'acétone, de méthyléthylcétone, de méthylisobutylcétone, de gamma valérolactone, de formiate d'éthyle, de formiate de propyle, d'acétate de méthyle, d'acétate d'éthyle, de lévulinate de méthyle, de lévulinate d'éthyle et de leurs combinaisons.

8. Procédé selon l'une quelconque des revendications 1 à 7, dans lequel la quantité de solvant organique aprotique est comprise entre 1 et 50 mL de solvant organique aprotique par gramme d'humines.

9. Procédé selon l'une quelconque des revendications 1 à 8, dans lequel la quantité de composé réactif par quantité d'humines est comprise entre 0,001 et 1,0 g de composé réactif par g d'humines.

10. Procédé selon l'une quelconque des revendications 1 à 9, dans lequel le mélange contenant des humines est maintenu à une température comprise dans la gamme allant de 50 à 250°C.

11. Procédé selon l'une quelconque des revendications 1 à 10, dans lequel le mélange contenant des humines est maintenu à température élevée pendant une période comprise entre 0,2 et 6 h.

12. Procédé selon l'une quelconque des revendications 1 à 11, dans lequel les humines modifiées sont reprises dans un solvant non miscible à l'eau et la solution obtenue est alors soumise à une extraction liquide-liquide avec le liquide de lavage aqueux.
